# EUROPEAN PATENT APPLICATION

(11) **EP 1 231 789 A2**
(43) Date of publication of application: **14.08.2002**
(21) Application number: 02250435.1
(22) Date of filing: 22.01.2002
(51) Int. Cl.: H04N 7/16, H04N 5/445, H04H 1/00

(54) **Broadcast data receiver for bookmarking of a selected point in a programme**

(30) Priority: 31.01.2001 GB 0102377
(71) Applicant: Pace Micro Technology PLC, Saltaire, Shipley, BD18 3LF (GB)
(72) Inventor: Moir, Mark, Waterbeach, Cambridge CB5 9QF (GB)
(74) Representative: Wood, Graham

(57) **Abstract**

A broadcast data receiver (BDR) for receiving video, audio and/or auxiliary data from a broadcaster is provided. The video audio and/or auxiliary data relates to programme information. The BDR allows a user to select a particular point in a programme, data relating to the selected point being stored in memory means in or connected to the receiver. When the programme is repeated, the BDR recognises the selected point in the programme and informs the user that the selected point has been reached or is due to be reached in a pre-determined period of time.

## Description

This invention relates to broadcast data receivers and particularly to broadcast data receivers used in television systems.

The television system referred to in the following description typically comprises a display screen and a broadcast data receiver (i.e., set top box) communicating with the display screen. The broadcast data receiver receives video, audio and/or auxiliary data received from a broadcaster at a remote location. The broadcast data relates to programme and channel information. Multi-channel broadcast systems are becoming increasingly more common and due to the large number of channels that are available, it is inevitable that many programmes are repeated regularly.

It is often the case that a user may be watching a programme and during that programme they may be interrupted by a telephone call, someone knocking at the door and/or the like. Alternatively the user may not have sufficient time to finish watching the remainder of the programme if they have to go out. One option is to video/record the remainder of the programme and watch the same at a later time. However, the user may not have sufficient time to set the video for recording or the video may already be being used to record something on a different channel. If the programme is repeated at a later time in the future, the user may not realise that the programme is being repeated and may therefore miss the same. Even if the user knows that the programme is being repeated, they may not wish to watch the entire programme again.

It is therefore an aim of the present invention to provide a means for allowing a user to "book-mark" a particular point in a programme and then be informed when the book mark is reached when or if the programme is repeated.

According to a first aspect of the present invention there is provided a broadcast data receiver (BDR) for receiving video, audio and/or auxiliary data from a broadcaster, said video audio and/or auxiliary data relating to programme information and characterised in that means are provided to allow a user to select a particular point in a programme, said user selection being stored in memory means in or connected to said receiver and, when said programme is repeated, the BDR recognises said selected point in said programme and informs the user that the selected point has been reached or is due to be reached in a pre-determined period of time.

Preferably the selected point is an interval of time after the start and before the finish of the programme.

The present invention provides a means of allowing a user to bookmark a particular point in a programme such that if the programme is repeated the user is given the option of viewing the programme from the selected point, rather than watching the entire repeat again.

In one embodiment the receiver switches to the programme having a selected point automatically once the selected point is reached, irrespective of the channel and/or programme being viewed and/or currently tuned into at that particular time.

In an alternative embodiment a visual and/or audio indicator is provided to indicate to the user that the selected point of the programme is to be or has been reached. The user can then turn to the relevant channel and view the programme from the selected point.

Preferably the visual indicator displays details relating to the programme for which a selected point has been or is to be reached such as the user or users who selected the point, the channel the programme is being shown on, a description of the programme, the period of time from the start or the finish of the programme at which the selection was made and/or the like.

Preferably the selection is made using a remote control handset communicating with the broadcast data receiver and/or other control means on a display screen communicating with or provided on the receiver.

Preferably any programme having a selected point therein is identified as such on an electronic programme guide, thereby allowing a user to plan their television watching accordingly.

Preferably the user is provided with the option of ignoring or deleting the visual and/or audio indicator. If the option of viewing the selected point is ignored, the selected point can be stored in the memory means until a further repeat of the programme is shown.

Preferably the selected point is stored as a time index in the memory means, together with a means of identifying the programme having the selected point.

In one embodiment the broadcast data receiver is capable of backdating the selected point by a pre-determined period of time, such that when the receiver informs the user that the selected point has been reached in a repeated program, the user can view/listen to the programme from the backdated point to allow the user to remind themselves of events leading up to the selected point in the programme.

In a yet further embodiment the receiver is able to use auxiliary data and/or the like, such as subtitle data to provide a summary to the user of events leading up to the selected point in the programme. The summary can be provided on the visual indicator display or can be provided on the display screen once the user has selected to continue watching/listening to the programme from the selected point.

According to a second aspect of the present invention there is provided a television system, said television system including a broadcast data receiver (BDR) and a display screen connected to or forming part of said BDR, said BDR receiving video, audio and/or auxiliary data from a broadcaster, said video audio and/or auxiliary data relating to programme information and characterised in that the television system is provided with means to allow a user to select a particular point in a programme, said user selection being stored in memory means in or connected to said receiver and, when said programme is repeated, the BDR recognises said selected point in said programme and informs the user that the selected point has been reached or is due to be reached in a pre-determined period of time.

According to a further aspect of the present invention there is provided a method of using a television system, said television system including a broadcast data receiver (BDR) and a display screen connected to or forming part of said BDR, said BDR receiving video, audio and/or auxiliary data from a broadcaster, said video audio and/or auxiliary data relating to programme information and characterised in that said method includes the steps of a user selecting a particular point in a programme, said BDR storing said user selection in memory means provided in or connected to said receiver and, when said programme is repeated, the BDR recognises said selected point in said programme and informs the user that the selected point has been reached or is due to be reached in a pre-determined period of time.

The present invention therefore provides an alternative solution to a user having to video/record a portion of a particular programme which they wish to watch in the future.

An embodiment of the present invention will now be described with reference to the accompanying figures wherein:

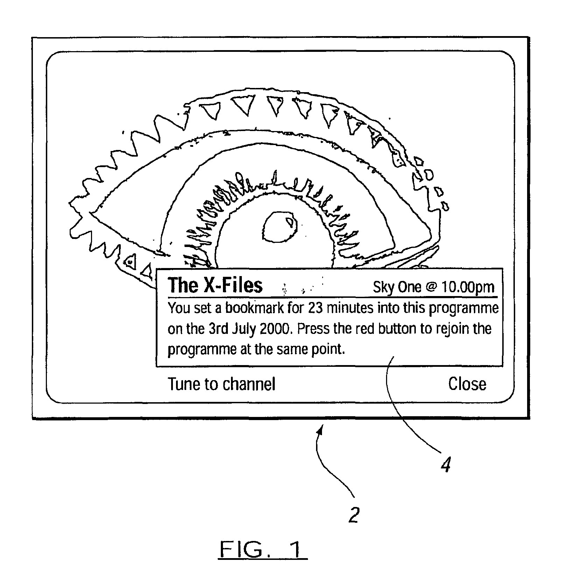

Figure 1 is an example of a display screen according to the present invention.

Referring to Figure 1, there is illustrated a display screen 2 forming part of a television system including a broadcast data receiver. The broadcast data receiver receives digital data from a broadcaster at a remote location via satellite, cable or terrestrial means and processes the data to generate video, audio and/or auxiliary data on the display screen 2 or speakers of the television system. The broadcast data receiver is also provided with memory means in the form of a hard disk drive to store programme data and/or the like.

The broadcast data receiver, in use, tunes to an incoming transport stream of data which carries channel information relating to programmes.

Due to the large number of channels that are now available with digital television, many of the programmes available for watching are repeated regularly on many different channels. In accordance with the present invention, the broadcast data receiver is provided with a means of allowing a user to select a particular point in a programme they are viewing and to store data relating to that selected point in the form of a book mark in the memory means of the receiver, so that when the selected programme is repeated at a later date, the user can be informed that the book mark has been reached or is shortly to be reached, thereby providing the user with the option of watching the selected programme from same point at which they previously stopped watching the same.

A visual or audio indicator is provided to indicate to a user that the bookmark has been or is due to be reached. The visual indicator can be in the form of an icon or message 4 which is displayed on a part of display screen 2, informing the user of the name of the repeated programme in which a bookmark has been placed, the time of showing of the programme, the channel, and the period of time which has elapsed from the start of the programme. The message 4 can also include the identity of the user that made the particular bookmark, a description of the programme with the book mark, and/or the like. It is envisaged that if the programme is being repeated a third or further known time in the future, this or these times can be included in the message to allow a user to decide whether to watch the bookmarked point now or at some later time when the programme is repeated again.

The user can ignore the message or rejoin the programme by selecting the required channel. A default position can be set where the receiver automatically switches to the appropriate channel when the bookmark has been reached.

The broadcast data receiver generates an electronic programme guide (EPG) via data received from the broadcaster. The EPG displays programme information on the display screen relating to a large number of available channels in a user friendly format on a single display. The data sent from the broadcaster which is used to generate the EPG contains information relating to the title of the programme, a programme description, the times of showing of the programme, subtitle information and/or the like. In addition, a unique number or code is assigned to each programme to allow the above mentioned programme description, subtitle information and to the like to be related to the correct programme.

If a particular programme is repeated, the broadcaster typically uses the same unique code as given to the original programme to identify the repeated programme. Therefore, when a user selects a particular point of a programme to be "book marked", the unique code of the selected programme is saved on the hard disk drive of the BDR, together with a time index value representative of the time point in the programme that the user wishes to be reminded to watch from when the programme is repeated.

The time index is the time from the start (but could be from the end) of the programme at which the user wishes to place a bookmark in order to continue to watch the programme from the bookmarked point when the programme is repeated. For example, if the programme started at 6pm and the user sends a signal to the BDR via the remote control that they wish to place a bookmark at 6.15pm, the BDR calculates that the bookmark is to be placed 15 minutes from the start of the programme. A unique ID is given to the programme such that when the programme is identified in the programme schedules via the unique ID as being repeated, the BDR sets a bookmark alert to alert the user for 15 minutes into the programme.

The BDR typically performs regular searches of programme schedule information for comparison with programme data stored in the memory of the BDR, if a match between the stored bookmark data and the programme schedule information is found, a book mark is set in the programme schedule information.

An icon or similar indication can be provided in the EPG to indicate to a user at a glance which programmes have been bookmarked.

Thus the present invention provides means for bookmarking a user selected point in a programme such that when the programme is repeated, the user can carry on watching the programme from where they previously left off.

## Claims

1. A broadcast data receiver (BDR) for receiving video, audio and/or auxiliary data from a broadcaster, said video audio and/or auxiliary data relating to programme information and **characterised in that** means are provided to allow a user to select a particular point in a programme, said user selection being stored in memory means in or connected to said receiver and, when said programme is repeated, the BDR recognises said selected point in said programme and informs the user that the selected point has been reached or is due to be reached in a pre-determined period of time.

2. A broadcast data receiver according to claim 1 **characterised in that** selected point in the programme is an interval of time after the start and before the finish of said programme.

3. A broadcast data receiver according to claim 1 **characterised in that** the receiver switches to the repeated programme having a pre-selected point stored in the memory of the receiver once the selected point is reached, irrespective of the channel and/or programme being viewed at that particular time.

4. A broadcast data receiver according to claim 1 **characterised in that** a visual and/or audio indicator is provided to indicate to the user that the selected point is due to be or has been reached.

5. A broadcast data receiver according to claim 4 **characterised in that** following the visual and/or audio indication, the user is able to tune to the relevant channel and view the programme from the selected point.

6. A broadcast data receiver according to claim 4 **characterised in that** the visual and/or audio indicator can be deleted by the user.

7. A broadcast data receiver according to claim 4 **characterised in that** if the user ignores the visual and/or audio indicator, the selected point is stored in the memory until a further repeat of the programme is shown.

8. A broadcast data receiver according to claim 4 **characterised in that** the visual indicator (4) displays details relating to the programme for which a selected point has been or is to be reached.

9. A broadcast data receiver according to claim 8 **characterised in that** the details include any or any combination of the channel the programme is being shown on, a description of the programme and/or the period of time from the start or the finish of the programme at which the selection point was made.

10. A broadcast data receiver according to claim 8 **characterised in that** the receiver uses auxiliary data to provide a summary of the events of the programme leading up to the selected point in said programme.

11. A broadcast data receiver according to claim 10 **characterised in that** subtitle data is used to provide a programme summary.

12. A broadcast data receiver according to claim 1 **characterised in that** the means allowing user selection of a particular point in a programme is a remote control handset communicating with the BDR.

13. A broadcast data receiver according to claim 1 **characterised in that** any programme having a user selected point is identified as such on an electronic programme guide (EPG) when the programme is repeated.

14. A broadcast data receiver according to claim 1 **characterised in that** the selected point is stored in a time index in the memory, together with a means of identifying the programme having the selected point.

15. A broadcast data receiver according to claim 1 **characterised in that** the receiver backdates the selected point by a pre-determined period of time into the programme.

16. A television system, said television system including a broadcast data receiver (BDR) and a display screen (2) connected to or forming part of said BDR, said BDR receiving video, audio and/or auxiliary data from a broadcaster, said video audio and/or auxiliary data relating to programme information and **characterised in that** the television system is provided with means to allow a user to select a particular point in a programme, said user selection being stored in memory means in or connected to said receiver and, when said programme is repeated, the BDR recognises said selected point in said programme and informs the user that the selected point has been reached or is due to be reached in a pre-determined period of time.

17. A method of using a television system, said television system including a broadcast data receiver (BDR) and a display screen (2) connected to or forming part of said BDR, said BDR receiving video, audio and/or auxiliary data from a broadcaster, said video audio and/or auxiliary data relating to programme information and **characterised in that** said method includes the steps of a user selecting a particular point in a programme, said BDR storing said user selection in memory means provided in or connected to said receiver and, when said programme is repeated, the BDR recognises said selected point in said programme and informs the user that the selected point has been reached or is due to be reached in a pre-determined period of time.
